# EUROPEAN PATENT SPECIFICATION

(11) **EP 4 260 951 B1**
(45) Date of publication and mention of the grant of the patent: **17.06.2026**
(21) Application number: 23167010.0
(22) Date of filing: 06.04.2023
(51) Int. Cl.: B05D 3/02, F26B 3/30, F26B 3/28

(54) **LAMP ARRANGEMENT AND METHOD FOR CURING MATERIAL**
LAMPENANORDNUNG UND VERFAHREN ZUM AUSHÄRTEN VON MATERIAL
AGENCEMENT DE LAMPE ET PROCÉDÉ DE DURCISSEMENT DE MATÉRIAU

(30) Priority: 12.04.2022 SE 2230109
(43) Date of publication of application: 18.10.2023
(73) Proprietor: Hedson Technologies AB, 232 37 Arlöv (SE)
(72) Inventor: Ekfeldt, Linus, 42363 Torslanda (SE)
(74) Representative: Basck Limited

(56) References cited:
- EP-A1- 1 867 941
- EP-B1- 3 114 420
- CN-U- 201 454 816
- US-A- 4 907 533
- US-A1- 2014 110 390
- US-A1- 2016 116 211
- US-B1- 6 231 932
- US-B2- 10 791 799

## Description

### TECHNICAL FIELD

This invention relates to curing arrangements. In particular, though not exclusively, this invention relates to a lamp arrangement and a method for curing a material.

### BACKGROUND

Curing, such as paints or similar materials, is a common post-processing technique that is achieved by radiating the curing material with a radiation. Typically, Infrared curing, namely as IR curing, has found applications in various manufacturing industries, such as automobile industry, fashion industry, art industry, and so forth. Notably, IR curing may be used for curing paints, inks, adhesives, coatings, and so forth.

Moreover, the IR curing of a material may include applying radiant light energy within a line of sight thereof. However, factors such as distance between IR curing arrangement and the material, height of the material, intensity of the IR, and so forth, affect a desired curing of the material. Moreover, the conventional IR curing arrangements may fail to completely cure the material. Furthermore, only one part, that is withing the line of sight of the conventional IR arrangements may be cured at a time, thereby resulting in an extended curing time for the entire curing process.

It will be appreciated that in order to circumvent the aforementioned drawback of the conventional IR curing arrangements, multiple IR curing arrangements may be used parallelly. Notably, multiple IR curing arrangements enable achieving a smooth and even curing of the material. However, multiple IR curing arrangements may considerably increase power consumption as well as process cost. Additionally, the multiple IR curing arrangements may use radiations of only two wavelengths that may result in ineffective curing of the material.

The patent document published as EP3114420B1 discloses drying of water damage, where water damage frequently occurs in buildings in particular, whether due to flooding, damaged pipelines, or extinguisher use. Until now, the affected rooms needed to be dried over weeks using ineffective air dryers. Infrared emitters for drying purposes are known, but said infrared emitters are only locally effective such that a plurality of infrared emitters must be used in order to ensure an effective drying process. Due to the power consumption of said infrared emitters, however, the infrared emitters cannot be expediently operated on normal house sockets because the available amperages are not sufficient. The invention solves this problem by means of a control process which reduces the power consumption to the necessary level and thus allows multiple infrared emitters to be operated one after the other in an alternating manner. In this manner, the affected bodies are first heated and then a post-drying process is carried out, during which another infrared emitter heats and dries another body or another region of the body. A suitable control method additionally provides an efficient and complete drying process.

The patent document published as US6231932B1 discloses The present invention provides processes for drying and/or curing topcoatings and multicomponent composite coatings applied to surfaces of metal or polymeric substrates which include applying infrared radiation and warm, low velocity air simultaneously to the coating for a period of at least about 30 seconds and increasing the substrate temperature at a predetermined rate to achieve a specified peak temperature. Infrared radiation and hot air are applied simultaneously to the coating for a period of at least about 3 minutes and the substrate temperature is increased at a predetermined rate to achieve a specified peak temperature, such that a dried and/or cured coating is formed upon the surface of the substrate.

Therefore, in light of the foregoing discussion, there exists a need to overcome the aforementioned drawbacks associated with conventional curing arrangements.

### SUMMARY

A first aspect of the invention provides a lamp arrangement for curing a material, the lamp arrangement comprising a controller and two or more lamp units, wherein each of the at two or more lamp units comprises
- a first light source configured to emit radiation of a first wavelength and
- a second light source configured to emit radiation of a second wavelength, wherein
at least a first one of the two or more lamp units is arranged in a first direction and at least a second one of the two or more lamp units is arranged in a second direction, wherein the second direction is orthogonal to the first direction, and wherein
the controller is configured to control the intensity of the first light source and to control the intensity of the second light source based on the intensity of the first light source to provide a desired curing of the material as per the appended claims.

Suitably, the lamp arrangement may be used for curing the material (by radiating the material to be cured with a shortwave radiation and a mediumwave radiation. Advantageously, the lamp arrangement employs multiple light sources to be arranged side-by-side and in different directions to achieve a smooth and even curing of the material. This also increases the overall efficiency of the lamp arrangement while reducing the power consumption as compared to the power consumption by multiple curing arrangements.

The term *"material"* as used herein refers to a composition, such as a paint, an ink, an adhesive, and so forth, to be cured using the shortwave radiation and/or the mediumwave radiation.

The term "*light source*" as used herein refers to a light source capable of emitting infrared shortwave radiation or infrared mediumwave radiation. Herein a first light source from amongst the two light sources may be configured to emit the shortwave radiation and a second light source from amongst the two light sources may be configured to emit the mediumwave radiation.

According to the invention, the first wavelength corresponds to infrared medium wave radiation, i.e. a wavelength in the range 1500 to 3000 nanometers 1700 nanometer peak, and the second wavelength corresponds to infrared short wave radiation, i.e. a wavelength in the range 780 to 1500 nanometers.

In some embodiments the first wavelength is in the range 1500 to 2500 nanometers. In some embodiments the first wavelength is in the range 1500 to 2000 nanometers. In some embodiments the first wavelength is in the range 1600 to 1800 nanometers. In some embodiments the first wavelength is in the range 1650 to 1750 nanometers. And, in some embodiments the first wavelength is 1700 nanometers.

In some embodiments the second wavelength is in the range 900 to 1300 nanometers. In some embodiments the second wavelength is in the range 1000 to 1200 nanometers. In some embodiments the second wavelength is in the range 1050 to 1150 nanometers. And, in some embodiments the second wavelength is 1100 nanometers.

In some embodiments, the first wavelength is 500 to 600 nanometers longer than the second wavelength.

It should be noted that the wavelengths given relate to a peak wavelength of the relevant light source.

The lamp unit may be implemented as a cassette having the two light sources implemented as filaments therein. Beneficially, the two filaments in one lamp provides a more even distribution of the emitted radiation.

In some embodiments, one or more of the two or more lamp units thus comprises one lamp having two filaments, the first filament corresponding to the first light source and the second filament corresponding to the second light source. And, in some embodiments, the one or more of the two or more lamp units comprises a cassette and a reflector for both filaments housed in the cassette.

Alternatively, the lamp unit may be implemented as two separate lamps (each having one filament) housed together therein. Herein a first lamp from amongst the two separate lamps may be configured to emit the shortwave radiation and a second lamp from amongst the two separate lamps may be configured to emit the mediumwave radiation.

In some embodiments, one or more of the two or more lamp units comprises two lamps, the first lamp corresponding to the first light source and the second lamp corresponding to the second light source.

And, in some embodiments, the one or more of the two or more lamp units comprises a cassette and a reflector for both lamps housed in the cassette.

Optionally, the at least one lamp unit has a length and a base. Optionally, the length may be longer than the base. In such case, a cross-section of the at least one lamp unit may be any of a trapezoid, a rectangle, an elliptical, and so forth.

In some embodiments, the lamp arrangement further comprises a sensor arrangement, wherein the sensor arrangement is configured to measure at least one parameter selected from: a distance, a temperature, and a humidity, and wherein the controller is configured to control the intensity of the first and second light source based on the measured at least one parameter. Optionally, the sensor arrangement may employ a plurality of sensors, such as a temperature sensor, a humidity sensor, a distance sensor, an illumination sensor, and so forth, for detecting a surrounding temperature, a moisture level of the material being cured, a distance between the lamp arrangement from the material being cured, an intensity of radiation, and so forth. This is advantageous since the at least one parameter detected by the sensor arrangement is used by the controller to regulate the intensity of radiation to achieve desired curing of the material.

In some embodiments, the first direction is vertical and the second direction is horizontal. This allows for an even radiation as the radiation from the various lamp units overlap one another providing an even radiation of the material to be cured.

In some embodiments, at least one first lamp unit is arranged in the first direction and two lamp units are arranged in the second direction on opposite ends of the at least one first lamp unit with regards to the first direction.

In an exemplary implementation, there is one first lamp unit arranged in the first direction.

In another exemplary implementation, there are four first lamp units arranged in the first direction.

This advantageously provides a more even spread of the emitted radiation as the radiation from the vertical lamp units may be overlapped by the radiation from the horizontal lamp units, and vice versa. Additionally, such larger even spread may be achieved using a smaller number of at least two lamp units, thereby reducing the power requirement thereby.

In some embodiments, the intensity of the second light source is in a range of 50 - 70 % of the intensity of the first light source.

According to the invention, the controller is configured to operate the first light source in a time period comprising a plurality of time slots and to selectively activate or deactivate the first light source in each time slot, wherein the number of time slots where the first light source is activated provides the intensity of the first light source, and to operate the second light source in the same time period and to selectively activate or deactivate the second light source in each time slot, wherein the number of time slots where the second light source is activated provides the intensity of the second light source.

According to the invention, the controller is configured to operate the first light source at a first frequency of activation, and to operate the second light source at a second frequency of activation, or the controller is configured to operate the first light source to activate in groups of time slots, and to operate the second light source to activate in groups of time slots.

This is advantageous since the controller activates the light sources emitting shortwave radiation or mediumwave radiation to provide different intensities of radiations, enabling the light sources to run at a full power, at different frequencies or intervals, such that emitting the shortwave radiation at a lower intensity provides a smoother and more even curing, as the shortwaves penetrate deeper into the material and thus heats more effectively.

In this regard, the controller may send a stream of signal comprising 1's indicating that the receiving light source should be activated. In an example, if the first intensity is regarded as 100%, the first signal is a steady stream of 1s (such as 111111111111111) that is transmitted from or controlled by the controller for controlling the lamp arrangement and the activation of the first light sources, and if the second intensity is to be 50% of the first intensity, a second signal is a stream of 1's and 0's (such as 1010101010101010, 1111000011110000, 1100110011001100, 1111111100000000, and so on) that is transmitted from or controlled by the controller for controlling the lamp arrangement and the activation of the first light sources. In these examples groups of time slots are thus used in a time period for the 1's - the activations. If, for example a time period comprises 8 slots the first example transmits alternating 1's and 0's or the group is simply 1, the second example transmits groups of 4 1's and 4 0's, the third example transmits groups of 2 1's, 2 0's, 2 1's and 2 0' (alternatively the time period for the third example may be 4 and the groups are 2 1's and 2 0's), and the fourth example transmits one time period of 1's and one time period of 0's or alternatively has a longer time period.

It will be appreciated that an even distribution of 1's and 0's gives a more even curing. In another example, if the first intensity is to be 80%, this may also achieved with inserting 0's in between a sequence of 1's (such as 11110111101111011110), and if the second intensity is still being at 50%, then the second signal is for example 11000110001100011000 or 0100101001010010100.

Optionally, the at least one light source is configured to intermittently emit radiation or blink. Beneficially, such blinking of the at least one light source allows for the heat to transfer through the material to be cured through convection, thereby adding to the even curing that the disclosed lamp arrangement aims to provide.

Beneficially, operating the at least one light source at different frequencies emits radiations with multiple wavelengths that enable efficient curing of the material, without the need for a multiple such arrangements dedicated for curing of the material at a time.

A second aspect of the invention provides a method according to claim 11.

Throughout the description and claims of this specification, the words "comprise" and "contain" and variations of the words, for example, "comprising" and "comprises", mean "including but not limited to", and do not exclude other components, integers or steps. Moreover, the singular encompasses the plural unless the context otherwise requires: in particular, where the indefinite article is used, the specification is to be understood as contemplating plurality as well as singularity, unless the context requires otherwise.

### BRIEF DESCRIPTION OF THE DRAWINGS

One or more embodiments of the invention will now be described, by way of example only, with reference to the accompanying drawings, in which:
Figure. 1 is a schematic illustration of a lamp arrangement for curing a material, in accordance with an embodiment of the invention;
Figure. 2 is a schematic illustration of at least one lamp unit, in accordance with an embodiment of the invention;
Figure. 3 is a schematic illustration of a lamp arrangement for curing a material, in accordance with another embodiment of the invention; and
Figure. 4 is a flowchart showing steps of method for curing a material, in accordance with an embodiment of the invention.

### DETAILED DESCRIPTION OF EMBODIMENTS

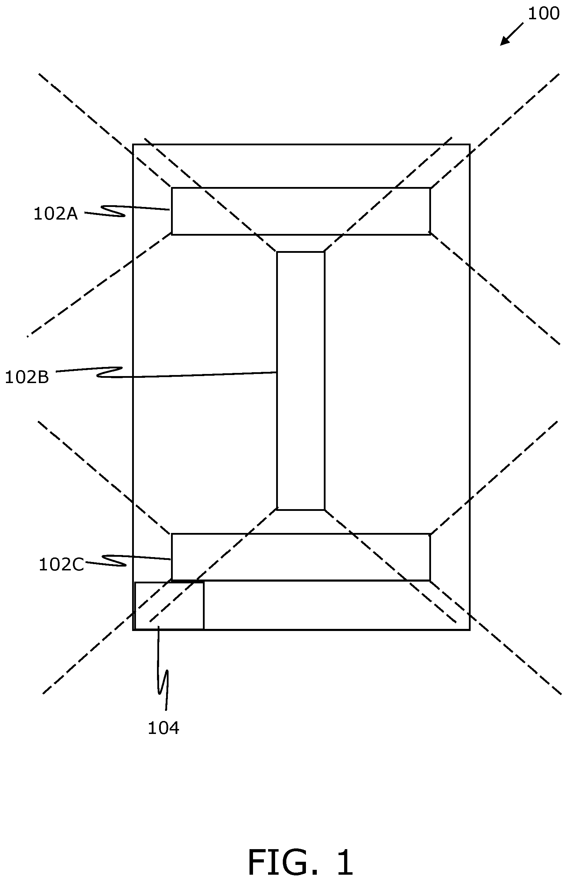

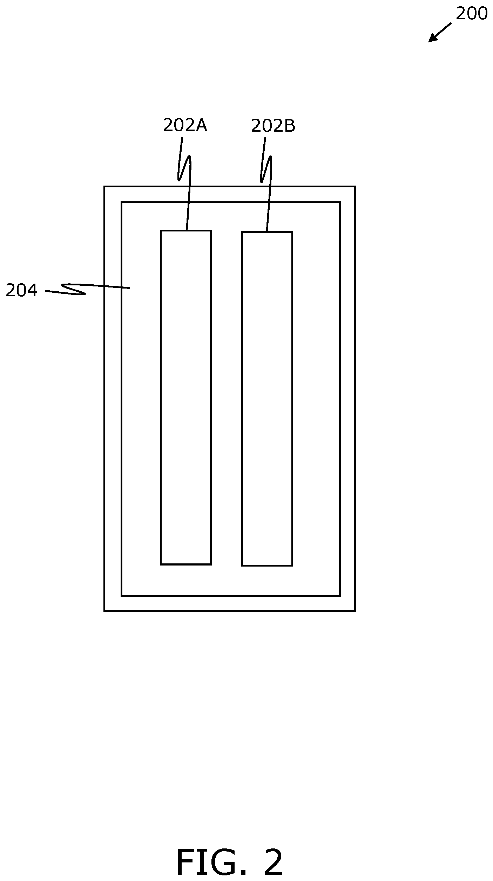

Referring to figure 1, shown is a schematic illustration of a lamp arrangement **100** for curing a material, in accordance with an embodiment of the invention. The lamp arrangement **100** comprises a plurality of lamp units, such as a lamp unit **102A,** a lamp unit **102B,** and a lamp unit **102C.** Additionally, each of the lamp units **102A, 102B,** and **102C** comprises at least one light source (not shown in figure 1, but shown in figure 2 and referenced **202A, 202B**) configured to emit a radiation (depicted as dashed lines) of a pre-defined intensity. In some embodiments at least some of the lamp units comprises at least one reflector (not shown in figure 1, but shown in figure 2 and referenced **204**). The lamp arrangement **100** comprises a controller **104** configured to control at least one parameter to provide the desired curing of the material.

In some embodiments, the plurality of lamp units, such as **102A, 102B,** and **102C** are arranged in a first and a second direction where the first and second direction are at a pre-defined angle with one another to provide the desired curing of the material. The predefined angle is in some embodiments 90 degrees (i.e orthogonal), and, in some embodiments 85-95 degrees (i.e. substantially orthogonal). As shown, the lamp units **102A** and **102C** are arranged in a horizontal direction, and the lamp unit **102B** is arranged orthogonally with respect to the lamp units **102A** and **102C,** i.e. in a vertical direction. Moreover, said arrangement beneficially allows for overlapping of radiations emitted from the lamp units thereby providing a more even curing of the material as is indicated by the dashed lines in figure 1.

It should be noted that even though the lamp arrangement **100** disclosed herein is shown and exemplified as being one device, it should be noted that the lamp arrangement may comprise several devices that are arranged together to provide the lamp arrangement disclosed herein. In some such embodiments, each lamp unit may be a standalone device. In such embodiments the lamp units may be connected to a controller, or one of the lamp units may comprise the controller.

Referring to figure 2, shown is a schematic illustration of at least one lamp unit **200,** in accordance with an embodiment of the invention. As shown, the at least one lamp unit **200** comprises a plurality of light sources, such as a light source **202A** and a light source **202B,** configured to emit radiations of pre-defined intensities. The lamp unit **200** may comprises a reflector **204** arranged around the light source **202A** and the light source **202B.** Alternatively two reflectors are arranged, each around one of the light sources.

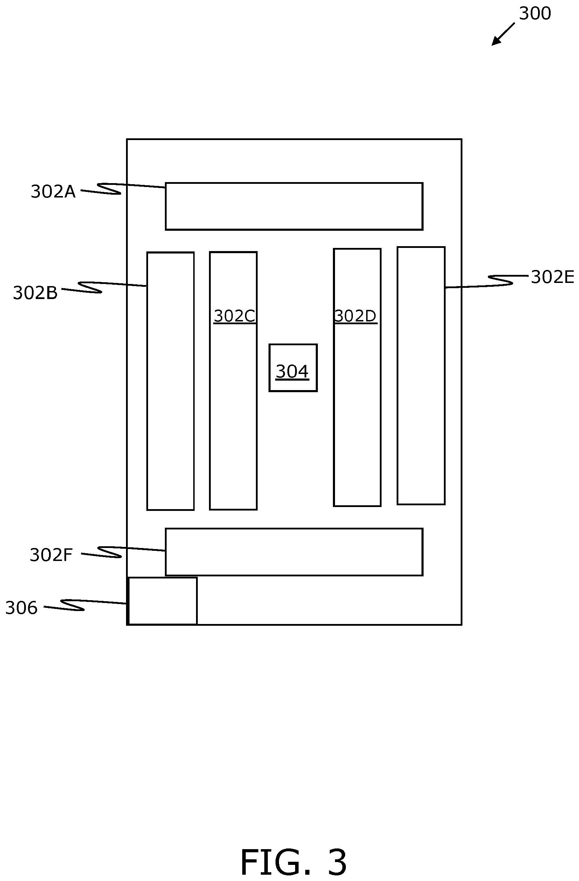

Referring to figure 3, shown is a schematic illustration of a lamp arrangement **300** for curing a material, in accordance with another embodiment of the invention. As shown, the lamp arrangement **300** comprises a plurality of lamp units, such as a lamp unit **302A,** a lamp unit **302B,** a lamp unit **302C,** a lamp unit **302D,** a lamp unit **302E,** and a lamp unit **302F** arranged in combination of a vertical and a horizontal alignment with each other, wherein the lamp units **302A** and **302F** are arranged in the horizontal direction with respect to each other, the lamp units **302B, 302C, 302D** and **302E** are arranged in the vertical direction with respect to each other, and the lamp units **302A** and **302F** are arranged orthogonally with respect to the lamp units **302B, 302C, 302D** and **302E.**

Moreover, the lamp arrangement **300** further comprises a sensor arrangement **304,** wherein the sensor arrangement is configured to measure at least one parameter selected from: a distance, a temperature, an intensity of the radiation, and a humidity. It should be noted that the lamp arrangement **100** of figure 1 may also comprise such a sensor arrangement **304.**

Furthermore, the lamp arrangement **300** comprises a controller **306** configured to control at least one parameter to provide the desired curing of the material.

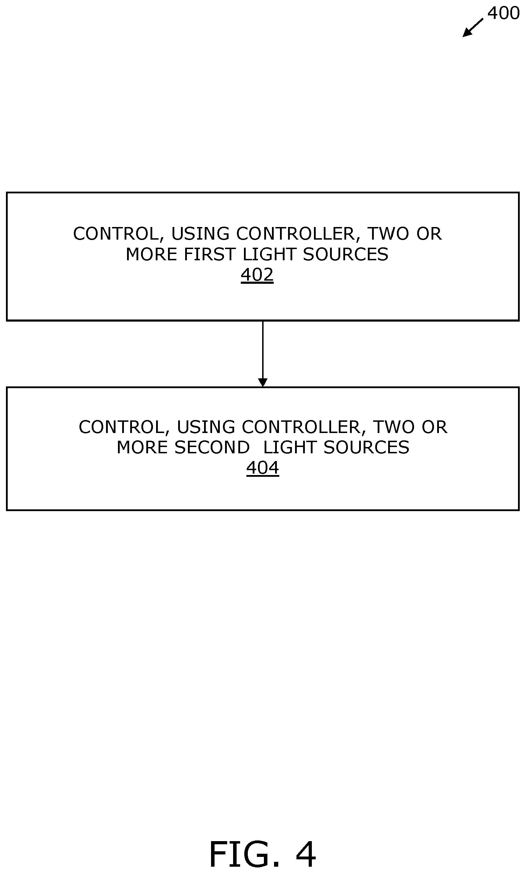

Referring to figure 4, shown is a flowchart showing a method **400** for curing a material, in accordance with an embodiment of the invention. The method relates to using a lamp arrangement as disclosed herein, the lamp arrangement comprising two or more lamp units, wherein each of the at two or more lamp units comprises a first light source configured to emit radiation of a first wavelength and a second light source configured to emit radiation of a second wavelength, wherein at least a first one of the two or more lamp units is arranged in a first direction and at least a second one of the two or more lamp units is arranged in a second direction, wherein the second direction is orthogonal to the first direction, and wherein the method comprises controlling **402** the intensity of the first light source and controlling **404** the intensity of the second light source based on the intensity of the first light source to provide a desired curing of the material.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A lamp arrangement (100) configured for curing a material, the lamp arrangement comprising
- a controller (104) and
- two or more lamp units (102A,102B,102C) wherein each of the at least two or more lamp units comprises
- a first light source (202A) configured to emit radiation of a first wavelength and
- a second light source (202B) configured to emit radiation of a second wavelength, wherein the first wavelength corresponds to infrared medium wave radiation and the second wavelength corresponds to infrared shortwave radiation and wherein at least a first one of the two or more lamp units (102A,102B,102C) is arranged in a first direction and at least a second one of the two or more lamp units (102A,102B,102C) is arranged in a second direction, wherein the second direction is orthogonal to the first direction, and wherein the controller is configured to control the intensity of the first light source and to control the intensity of the second light source based on the intensity of the first light source to provide a desired curing of the material,
**characterized in that**
the controller (104) is additionally configured to operate the first light source (202A) in a time period comprising a plurality of time slots and to selectively activate or deactivate the first light source (202A) in each time slot, wherein the number of time slots where the first light source is activated provides the intensity of the first light source (202A),
and to operate the second light source (202B) in the same time period and to selectively activate or deactivate the second light (202B) in each time slot, wherein the number of time slots where the second light source (202B) is activated provides the intensity of the second light source (202B),
operate the first light source at a first frequency of activation and
operate the second light source at a second frequency of activation; or
operate the first light source (202A) to activate in groups of time slots, and to
operate the second light source (202B) to activate in groups of time slots.

2. The lamp arrangement according to claim 1, further comprising a sensor arrangement (304), wherein the sensor arrangement is configured to measure at least one parameter selected from: a distance, a temperature, and a humidity, and wherein the controller (306) is configured to control the intensity of the first and second light source based on the measured at least one parameter.

3. The lamp arrangement according to any of the preceding claims, wherein the intensity of the second light source is in a range of 50 - 70 % of the intensity of the first light source.

4. The lamp arrangement according to any of the preceding claims, wherein one or more of the two or more lamp units comprises one lamp having two filaments, the first filament corresponding to the first light source and the second filament corresponding to the second light source.

5. The lamp arrangement according to claim 4, wherein the one or more of the two or more lamp units comprises
- a cassette and a reflector Z (204) for both filaments housed in the cassette, or
- a cassette and two reflectors, one reflector for each filament, housed in the cassette.

6. The lamp arrangement according to any of the preceding claims, wherein one or more of the two or more lamp units comprises two lamps, the first lamp corresponding to the first light source and the second lamp corresponding to the second light source.

7. The lamp arrangement according to claim 6, wherein the one or more of the two or more lamp units comprises
- a cassette and a reflector for both lamps housed in the cassette,
- a cassette and two reflectors, one reflector for each lamp, housed in the cassette.

8. The lamp arrangement according to any of the preceding claims, wherein the first direction is vertical and the second direction is horizontal.

9. The lamp arrangement according to any of the preceding claims, wherein at least one first lamp unit (302A,302F) is arranged in the first direction and two lamp units (302B,302C,302D,302E) are arranged in the second direction on opposite ends of the at least one first lamp unit with regards to the first direction.

10. The lamp arrangement according to claim 9, wherein
- there is one first lamp unit (302A,302B) arranged in the first direction, or
- there are four first lamp units (302C,302D,302E,302F) arranged in the first direction.

11. A method for use in a lamp arrangement (100) for curing a material according to any of the preceding claims, the lamp arrangement comprising two or more lamp units (102A,102B,102C), wherein each of the at least two or more lamp units comprises
- a first light source (202A) configured to emit radiation of a first wavelength and
- a second light source (202B) configured to emit radiation of a second wavelength, wherein the first wavelength corresponds to infrared medium wave radiation and the second wavelength corresponds to infrared shortwave radiation and wherein at least a first one of the two or more lamp units (102A,102B,102C) is arranged in a first direction and at least a second one of the two or more lamp (102A,102B,102C) is arranged in a second direction, wherein the second direction is orthogonal to the first direction, and wherein the method comprises controlling the intensity of the first light source Z (202A) and controlling the intensity of the second light source (202B) based on the intensity of the first light source to provide a desired curing of the material,
**characterized in that** the method further comprises
operating the first light source (202A) in a time period comprising a plurality of time slots and to selectively activating or deactivating the first light source (202A) in each time slot, wherein the number of time slots where the first light source (202A) is activated provides the intensity of the first light source,
operating the second light source (202B) in the same time period and to selectively activate or deactivate the second light source (202B) in each time slot, wherein the number of time slots where the second light source (202B) is activated provides the intensity of the second light source,
operating the first light source (202A) at a first frequency of activation and
operate the second light source (202B) at a second frequency of activation, or
operating the first light source (202A) to activate in groups of time slots, and
to operate the second light source (202B) to activate in groups of time slots.

## Patentansprüche

1. Lampenanordnung (100),
konfiguriert zum Härten eines Materials, wobei die Lampenanordnung Folgendes umfasst:
- eine Steuerung (104) und
- zwei oder mehr Lampeneinheiten (102A, 102B, 102C),
wobei jede der zwei oder mehr Lampeneinheiten Folgendes umfasst:
- eine erste Lichtquelle (202A), die so konfiguriert ist, dass sie Strahlung einer ersten Wellenlänge emittiert, und
- eine zweite Lichtquelle (202B), die so konfiguriert ist, dass sie Strahlung einer zweiten Wellenlänge emittiert, wobei
die erste Wellenlänge der Infrarotstrahlung mittlerer Wellenlänge entspricht und die zweite Wellenlänge der Infrarotstrahlung kurzer Wellenlänge entspricht und wobei
mindestens eine erste der zwei oder mehr Lampeneinheiten (102A, 102B, 102C) in einer ersten Richtung angeordnet ist und mindestens eine zweite der zwei oder mehr Lampeneinheiten (102A, 102B, 102C) in einer zweiten Richtung angeordnet ist, wobei die zweite Richtung orthogonal zur ersten Richtung ist, und wobei
die Steuerung dazu konfiguriert ist, die Intensität der ersten Lichtquelle zu steuern und die Intensität der zweiten Lichtquelle basierend auf der Intensität der ersten Lichtquelle zu steuern, um eine gewünschte Aushärtung des Materials bereitzustellen, **dadurch gekennzeichnet, dass**
die Steuerung (104) zusätzlich dazu konfiguriert ist, die erste Lichtquelle (202A) in einer Zeitperiode zu betreiben, die eine Vielzahl von Zeitschlitzen umfasst, und die erste Lichtquelle (202A) in jedem Zeitschlitz selektiv zu aktivieren oder zu deaktivieren, wobei die Anzahl von Zeitschlitzen, in denen die erste Lichtquelle aktiviert ist, die Intensität der ersten Lichtquelle (202A) bereitstellt, und die zweite Lichtquelle (202B) in der gleichen Zeitperiode zu betreiben und die zweite Lichtquelle (202B) in jedem Zeitschlitz selektiv zu aktivieren oder zu deaktivieren,
wobei die Anzahl von Zeitschlitzen, in denen die zweite Lichtquelle (202B) aktiviert ist, die Intensität der zweiten Lichtquelle (202B) bereitstellt, die erste Lichtquelle mit einer ersten Aktivierungsfrequenz zu betreiben und die zweite Lichtquelle mit einer zweiten Aktivierungsfrequenz zu betreiben;
oder
Betreiben der ersten Lichtquelle (202A), um sie in Gruppen von Zeitschlitzen zu aktivieren, und Betreiben der zweiten Lichtquelle (202B), um sie in Gruppen von Zeitschlitzen zu aktivieren.

2. Lampenanordnung nach Anspruch 1, ferner umfassend eine Sensoranordnung (304),
wobei die Sensoranordnung dazu konfiguriert ist, mindestens einen Parameter zu messen, der ausgewählt ist aus: einem Abstand, einer Temperatur und einer Feuchtigkeit, und wobei die Steuerung (306) dazu konfiguriert ist, die Intensität der ersten und zweiten Lichtquelle basierend auf dem mindestens einen gemessenen Parameter zu steuern.

3. Lampenanordnung nach einem der vorhergehenden Ansprüche, wobei die Intensität der zweiten Lichtquelle in einem Bereich von 50 bis 70 % der Intensität der ersten Lichtquelle liegt.

4. Lampenanordnung nach einem der vorhergehenden Ansprüche, wobei eine oder mehrere der zwei oder mehr Lampeneinheiten eine Lampe mit zwei Glühfäden umfasst, wobei der erste Glühfaden der ersten Lichtquelle und der zweite Glühfaden der zweiten Lichtquelle entspricht.

5. Lampenanordnung nach Anspruch 4, wobei eine oder mehrere der zwei oder mehr Lampeneinheiten Folgendes umfasst:
- eine Kassette und einen Reflektor (204)
für beide Glühfäden, die in der Kassette untergebracht sind, oder
- eine Kassette und zwei Reflektoren, ein Reflektor für jeden Glühfaden, in der Kassette untergebracht.

6. Lampenanordnung nach einem der vorhergehenden Ansprüche, wobei eine oder mehrere der zwei oder mehr Lampeneinheiten zwei Lampen umfassen, wobei die erste Lampe der ersten Lichtquelle und die zweite Lampe der zweiten Lichtquelle entspricht.

7. Lampenanordnung nach Anspruch 6, wobei eine oder mehrere der zwei oder mehr Lampeneinheiten Folgendes umfasst:
- eine Kassette und einen Reflektor für beide Lampen, die in der Kassette untergebracht sind,
- eine Kassette und zwei Reflektoren, ein Reflektor für jede Lampe, in der Kassette untergebracht.

8. Lampenanordnung nach einem der vorhergehenden Ansprüche, wobei die erste Richtung vertikal ist und die zweite Richtung horizontal ist.

9. Lampenanordnung nach einem der vorhergehenden Ansprüche,
wobei mindestens eine erste Lampeneinheit (302A, 302F) in der ersten Richtung angeordnet ist und zwei Lampeneinheiten (302B, 302C, 302D, 302E) in der zweiten Richtung an gegenüberliegenden Enden der mindestens einen ersten Lampeneinheit in Bezug auf die erste Richtung angeordnet sind.

10. Lampenanordnung nach Anspruch 9, wobei
- es eine erste Lampeneinheit (302A, 302B) gibt, die in der ersten Richtung angeordnet ist, oder
- es vier erste Lampeneinheiten (302C, 302D, 302E, 302F) gibt, die in der ersten Richtung angeordnet sind.

11. Verfahren zur Verwendung in einer Lampenanordnung (100) zum Härten eines Materials nach einem der vorhergehenden Ansprüche, wobei die Lampenanordnung zwei oder mehr Lampeneinheiten (102A, 102B, 102C) umfasst, wobei jede der mindestens zwei oder mehr Lampeneinheiten Folgendes umfasst:
- eine erste Lichtquelle (202A)
die dazu konfiguriert ist, Strahlung einer ersten Wellenlänge und
- eine zweite Lichtquelle (202B)
die dazu konfiguriert ist, Strahlung einer zweiten Wellenlänge auszusenden, wobei die erste Wellenlänge einer Infrarotstrahlung mittlerer Wellenlänge entspricht und die zweite Wellenlänge einer Infrarotstrahlung kurzer Wellenlänge entspricht und wobei
mindestens eine erste der zwei oder mehr Lampeneinheiten (102A, 102B, 102C) in einer ersten Richtung angeordnet ist und mindestens eine zweite der zwei oder mehr Lampeneinheiten (102A, 102B, 102C) in einer zweiten Richtung angeordnet ist, wobei die zweite Richtung orthogonal zur ersten Richtung ist, und wobei das Verfahren das Steuern der Intensität der ersten Lichtquelle (202A) und das Steuern der Intensität der zweiten Lichtquelle (202B) basierend auf der Intensität der ersten Lichtquelle umfasst, um ein gewünschtes Härten des Materials zu bewirken, **dadurch gekennzeichnet, dass** das Verfahren ferner Folgendes umfasst:
Betreiben der ersten Lichtquelle (202A) in einer Zeitperiode, die eine Vielzahl von Zeitschlitzen umfasst, und selektives Aktivieren oder Deaktivieren der ersten Lichtquelle (202A) in jedem Zeitschlitz, wobei die Anzahl der Zeitschlitze, in denen die erste Lichtquelle (202A) aktiviert wird, die Intensität der ersten Lichtquelle bereitstellt, Betreiben der zweiten Lichtquelle (202B) in derselben Zeitperiode und selektives Aktivieren oder Deaktivieren der zweiten Lichtquelle (202B) in jedem Zeitschlitz, wobei die Anzahl der Zeitschlitze, in denen die zweite Lichtquelle (202B) aktiviert wird, die Intensität der zweiten Lichtquelle bereitstellt,
Betreiben der ersten Lichtquelle (202A) mit einer ersten Aktivierungsfrequenz und
Betreiben der zweiten Lichtquelle (202B) mit einer zweiten Aktivierungsfrequenz, oder
Betreiben der ersten Lichtquelle (202A) zur Aktivierung in Gruppen von Zeitschlitzen und
Betreiben der zweiten Lichtquelle (202B) zur Aktivierung in Gruppen von Zeitschlitzen.

## Revendications

1. Agencement de lampe (100)
configuré pour durcir un matériau, l'agencement de lampe comprenant
- un dispositif de commande (104) et
- au moins deux unités de lampe (102A, 102B, 102C) dans lequel chacune des au moins deux unités de lampe comprend
- une première source lumineuse (202A) configurée pour émettre un rayonnement d'une première longueur d'onde et
- une deuxième source lumineuse (202B) configurée pour émettre un rayonnement d'une deuxième longueur d'onde, dans lequel
la première longueur d'onde correspond à un rayonnement infrarouge à ondes moyennes et la deuxième longueur d'onde correspond à un rayonnement infrarouge à ondes courtes et dans lequel
au moins une première des au moins deux unités de lampe (102A, 102B, 102C) est agencée dans une première direction et au moins une deuxième des au moins deux unités de lampe (102A, 102B, 102C) est agencée dans une deuxième direction, dans laquelle la deuxième direction est orthogonale à la première direction, et dans lequel
le dispositif de commande est configuré pour commander l'intensité de la première source lumineuse et pour commander l'intensité de la deuxième source lumineuse sur la base de l'intensité de la première source lumineuse afin de fournir un durcissement souhaité du matériau, **caractérisé en ce que**
le dispositif de commande (104) est en outre configuré pour faire fonctionner la première source lumineuse (202A) dans une période de temps comprenant une pluralité de tranches de temps et pour activer ou désactiver sélectivement la première source lumineuse (202A) dans chaque tranche de temps, dans lequel le nombre de tranches de temps où la première source lumineuse est activée fournit l'intensité de la première source lumineuse (202A), et pour faire fonctionner la deuxième source lumineuse (202B) dans la même période de temps et pour activer ou désactiver sélectivement la deuxième source lumineuse (202B) dans chaque tranche de temps,
dans lequel le nombre de tranches de temps où la deuxième source lumineuse (202B) est activée fournit l'intensité de la deuxième source lumineuse (202B), faire fonctionner la première source lumineuse à une première fréquence d'activation et faire fonctionner la deuxième source lumineuse à une deuxième fréquence d'activation ;
ou
faire fonctionner la première source lumineuse (202A) pour l'activer par groupes de tranches de temps, et faire fonctionner la deuxième source lumineuse (202B) pour l'activer par groupes de tranches de temps.

2. Agencement de lampe selon la revendication 1, comprenant en outre un agencement de capteur (304),
dans lequel l'agencement de capteur est configuré pour mesurer l'au moins un paramètre sélectionné parmi : une distance, une température et une humidité, et dans lequel le dispositif de commande (306) est configuré pour commander l'intensité des première et deuxième sources lumineuses sur la base de l'au moins un paramètre mesuré.

3. Agencement de lampe selon l'une quelconque des revendications précédentes, dans lequel l'intensité de la deuxième source de lumière est dans une plage de 50 à 70 % de l'intensité de la première source de lumière.

4. Agencement de lampe selon l'une quelconque des revendications précédentes, dans lequel une ou plusieurs des au moins deux unités de lampe comprend une lampe ayant deux filaments, le premier filament correspondant à la première source lumineuse et le deuxième filament correspondant à la deuxième source lumineuse.

5. Agencement de lampe selon la revendication 4, dans lequel une ou plusieurs des au moins deux unités de lampe comprennent
- une cassette et un réflecteur (204)
pour les deux filaments logés dans la cassette, ou
- une cassette et deux réflecteurs, un réflecteur pour chaque filament, logés dans la cassette.

6. Agencement de lampe selon l'une quelconque des revendications précédentes, dans lequel une ou plusieurs des deux unités de lampe ou plus comprend deux lampes, la première lampe correspondant à la première source de lumière et la deuxième lampe correspondant à la deuxième source de lumière.

7. Agencement de lampe selon la revendication 6, dans lequel une ou plusieurs des au moins deux unités de lampe comprennent
- une cassette et un réflecteur pour les deux lampes logées dans la cassette,
- une cassette et deux réflecteurs, un réflecteur pour chaque lampe, logés dans la cassette.

8. Agencement de lampe selon l'une quelconque des revendications précédentes, dans lequel la première direction est verticale et la deuxième direction est horizontale.

9. Agencement de lampe selon l'une quelconque des revendications précédentes,
dans lequel l'au moins une première unité de lampe (302A, 302F) est agencée dans la première direction et deux unités de lampe (302B, 302C, 302D, 302E) sont agencées dans la deuxième direction aux extrémités opposées de l'au moins une première unité de lampe par rapport à la première direction.

10. Agencement de lampe selon la revendication 9, dans lequel
- une première unité de lampe (302A, 302B) est agencée dans la première direction, ou
- quatre premières unités de lampe (302C, 302D, 302E, 302F) sont agencées dans la première direction.

11. Procédé destiné à être utilisé dans un agencement de lampe (100) pour durcir un matériau selon l'une quelconque des revendications précédentes, l'agencement de lampe comprenant deux unités de lampe ou plus (102A, 102B, 102C), dans lequel chacune des au moins deux unités de lampe ou plus comprend
- une première source lumineuse (202A) configurée pour émettre un rayonnement d'une première longueur d'onde et
- une deuxième source lumineuse (202B) configurée pour émettre un rayonnement d'une deuxième longueur d'onde, dans lequel la première longueur d'onde correspond à un rayonnement infrarouge d'onde moyenne et la deuxième longueur d'onde correspond à un rayonnement infrarouge d'onde courte et dans lequel
l'au moins une première des deux unités de lampe ou plus (102A, 102B, 102C) est agencée dans une première direction et l'au moins une deuxième des deux unités de lampe ou plus (102A, 102B, 102C) est agencée dans une deuxième direction, dans laquelle la deuxième direction est orthogonale à la première direction, et dans lequel le procédé comprend la commande de l'intensité de la première source lumineuse (202A) et la commande de l'intensité de la deuxième source lumineuse (202B) en fonction de l'intensité de la première source lumineuse afin de fournir un durcissement souhaité du matériau, **caractérisé en ce que** le procédé comprend en outre
le fonctionnement de la première source lumineuse (202A) dans une période de temps comprenant une pluralité de tranches de temps et l'activation ou la désactivation sélective de la première source lumineuse (202A) dans chaque tranche de temps, dans lequel le nombre de tranches de temps où la première source lumineuse (202A) est activée fournit l'intensité de la première source lumineuse, le fonctionnement de la deuxième source lumineuse (202B) dans la même période de temps et l'activation ou la désactivation sélective de la deuxième source lumineuse (202B) dans chaque tranche de temps, dans lequel le nombre de tranches de temps où la deuxième source lumineuse (202B) est activée fournit l'intensité de la deuxième source lumineuse,
le fonctionnement de la première source lumineuse (202A) à une première fréquence d'activation et
le fonctionnement de la deuxième source lumineuse (202B) à une deuxième fréquence d'activation, ou
le fonctionnement de la première source lumineuse (202A) de manière à l'activer par groupes de tranches de temps, et
le fonctionnement de la deuxième source lumineuse (202B) de manière à l'activer par groupes de tranches de temps.
